(19) Europäisches Patentamt
European Patent Office
Office européen des brevets

(11) **EP 3 321 641 B1**

(12) **EUROPÄISCHE PATENTSCHRIFT**

(45) Veröffentlichungstag und Bekanntmachung des Hinweises auf die Patenterteilung:
**29.07.2020   Patentblatt 2020/31**

(51) Int Cl.:
***G01D 5/38*** *(2006.01)*      ***G01D 5/347*** *(2006.01)*
***G02B 5/18*** *(2006.01)*

(21) Anmeldenummer: **17198730.8**

(22) Anmeldetag: **27.10.2017**

(54) **GITTERSTRUKTUR FÜR EINE OPTISCHE POSITIONSMESSEINRICHTUNG**

GRATING FOR AN OPTICAL POSITION MEASURING DEVICE

RESEAU POUR UN DISPOSITIF DE MESURE DE POSITION OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2016   DE 102016222000**

(43) Veröffentlichungstag der Anmeldung:
**16.05.2018   Patentblatt 2018/20**

(73) Patentinhaber: **Dr. Johannes Heidenhain GmbH 83301 Traunreut (DE)**

(72) Erfinder:
• **WEIDMANN, Josef**
  **84550 Feichten a.d. Alz (DE)**
• **SPECKBACHER, Peter**
  **84558 Kirchweidach (DE)**

(56) Entgegenhaltungen:
**WO-A1-2004/025335      JP-A- 2001 108 812
US-A- 3 441 350      US-B1- 7 349 599**

• **NAULLEAU P P ET AL: "Fabrication of high-efficiency multilayer-coated binary blazed gratings in the EUV regime", OPTICS COMMUNICAT, ELSEVIER, AMSTERDAM, NL, Bd. 200, Nr. 1-6, 15. Dezember 2001 (2001-12-15), Seiten 27-34, XP004326868, ISSN: 0030-4018, DOI: 10.1016/S0030-4018(01)01647-9**

**Beschreibung**

## GEBIET DER TECHNIK

Die vorliegende Erfindung betrifft eine Gitterstruktur für eine optische Positionsmesseinrichtung.

## STAND DER TECHNIK

In optischen Positionsmesseinrichtungen werden üblicherweise Maßverkörperungen über bekannte Abtastprinzipien optisch abgetastet, um darüber positionsabhängige Signale zu erzeugen.

Die dabei verwendeten Maßverkörperungen umfassen Gitterstrukturen mit alternierend angeordneten Teilungsbereichen, die unterschiedliche optische Eigenschaften aufweisen. Beispielsweise kann im Fall einer Auflicht-Abtastung eine Reflexions-Maßverkörperung mit einer Gitterstruktur vorgesehen sein, die aus alternierend angeordneten Teilungsbereichen mit hoher und geringer Reflektivität besteht. Bei Durchlicht-Abtastungen sind auf der Transmissions-Maßverkörperung Gitterstrukturen mit Teilungsbereichen unterschiedlicher Durchlässigkeit angeordnet; ferner sind Systeme bekannt, bei denen Phasengitter Gitterstrukturen aufweisen, die Teilungsbereiche mit unterschiedlichen phasenschiebenden Wirkungen umfassen etc.

Außer auf Seiten der Maßverkörperung können derartige Gitterstrukturen desweiteren noch auf anderen Komponenten der Positionsmesseinrichtung erforderlich sein, beispielsweise auf der Abtastplatte, die zur optischen Abtastung der Maßverkörperung genutzt wird.

Mit zunehmend höherer Auflösung der Positionsmesseinrichtung werden grundsätzlich immer kleinere Strukturen auf Seiten der eingesetzten Gitterstrukturen erforderlich. Die Breiten der strichförmigen Teilungsbereiche entsprechender Gitterstrukturen liegen hierbei in der Größenordnung weniger 100nm bis zu 20$\mu$m. Zur Herstellung derart feiner Gitterstrukturen kommen Elektronenstrahl- oder Laserstrahlschreiber zum Einsatz, mit deren Hilfe die Masken für die entsprechenden Lithographie-Verfahren geschrieben werden, über die dann letztlich die Massenfertigung der Gitterstrukturen im Kopierverfahren erfolgt. Im Fall orthogonaler Geometrien der Teilungsbereiche in der Gitterstruktur ergeben sich dabei keine größeren Schwierigkeiten. Problematisch ist jedoch die Fertigung von Gitterstrukturen, wenn die Teilungsbereiche Begrenzungslinien aufweisen, welche mindestens teilweise gekrümmt verlaufen. Hierbei kann es sich beispielsweise um gekrümmte Begrenzungslinien im Fall diffraktiver Gitterstrukturen handeln etc.. Derartige Begrenzungslinien in den Gitterstrukturen müssen in geeigneter Weise approximiert werden, da die zur Masken-Herstellung eingesetzten Elektronenstrahl- oder Laserstrahlschreiber in der Regel in orthogonalen Koordinatensystemen arbeiten, nämlich im vorstehend erwähnten Referenz-Koordinatensystem. Bisher bekannte Verfahren approximieren solche Begrenzungslinien von Teilungsbereichen derart, dass diese Begrenzungslinien Abschnitte aufweisen, die an den Abschnitts-Grenzen abrupte Änderungen in den Kantenrauigkeiten aufweisen. Das Ziel dieser Verfahren ist üblicherweise, der nicht-orthogonalen Begrenzungslinie zu folgen, wobei die Länge des Begrenzungslinienabschnitts, über den gemittelt wird, im Bereich zwischen wenigen 100nm bis zu mehreren 100$\mu$m liegen kann. Befinden sich im Abtaststrahlengang optischer Positionsmesseinrichtungen nunmehr Gitterstrukturen mit Teilungsbereichen, die solchermaßen approximierte Begrenzungslinien aufweisen, so resultieren gestörte Wellenfronten, die im Hochpräzisionsbereich die Messgenauigkeit der Positionsmesseinrichtung beeinträchtigen können.

Aus der Veröffentlichung von P.P. Naulleau et al., Fabrication of highefficiency multilayer-coated binary blazed gratings in the EUV regime, OPTICS COMMUNICATIONS, Elsevier, Amsterdam, Bd. 200, Nr. 1 - 6, Dezember 2001, S. 27 - 34 sowie der Druckschrift WO 2004/025335 A1 sind Approximationsverfahren für geradlinige Begrenzungslinien geblazter Gitter bekannt, bei dem diese durch Treppenlinien approximiert werden. US7,349,599 B1 offenbart Approximationsverfahren für gekrümmte Begrenzungslinien von optischen Gitterstrukturen, bei dem diese durch Treppenlinien approximiert werden können.

## ZUSAMMENFASSUNG DER ERFINDUNG

Der vorliegenden Erfindung liegt die Aufgabe zugrunde, Gitterstrukturen für eine optische Positionsmesseinrichtung zu schaffen, bei der die Begrenzungslinien von Teilungsbereichen, welche mindestens teilweise gekrümmt verlaufen, möglichst einen Kantenrauigkeits-Verlauf ohne abrupte Sprünge aufweisen.

Diese Aufgabe wird erfindungsgemäß durch eine Gitterstruktur für eine optische Positionsmesseinrichtung mit den Merkmalen des Anspruchs 1 gelöst.

Vorteilhafte Ausführungen der erfindungsgemäßen Gitterstruktur ergeben sich aus den Maßnahmen, die in den abhängigen Ansprüchen aufgeführt sind. Die erfindungsgemäße Gitterstruktur für eine optische Positionsmesseinrichtung umfasst Teilungsbereiche, die mindestens eine Begrenzungslinie aufweisen, welche mindestens teilweise gekrümmt verläuft.

Die Begrenzungslinie ist zumindest teilweise durch eine Treppenlinie approximiert, die aus aufeinanderfolgenden, orthogonal zueinander orientierten ersten und zweiten Treppenlinien-Abschnitten besteht, welche an Treppenstufen-Punkten aneinandergrenzen und parallel zu den beiden Koordinatenachsen eines orthogonalen Referenz-Koordinatensystems orientiert sind. Die Treppenlinie ist zwischen zwei Approximations-Parallelen eingepasst, die in jeweils gleichem Abstand beidseitig benachbart zur Begrenzungslinie verlaufen, wobei die Treppenstufen-Punkte auf den Approximations-Parallelen liegen. Hierbei hängt der Abstand zwischen einem Treppenstufen-Punkt und dem übernächsten Treppenstufen-Punkt stetig vom Winkel ab, der zwischen der Begrenzungslinie und einem ersten Treppenlinien-Abschnitt zwischen den beiden Treppenstufen-Punkten resultiert, der parallel zu einer ersten Koordinatenachse des Referenz-Koordinatensystems orientiert ist.

Bei Werten des Winkels zwischen der Begrenzungslinie und dem ersten Treppenlinien-Abschnitt von 45°, 135°, 225° oder 315° kann der Abstand jeweils einen Minimalwert besitzen, während bei Annäherung des Winkels an Werte von 0°, 90°, 180° oder 270° der Abstand jeweils stetig ansteigt.

Es ist auch möglich, dass bei einem Wert des Winkels zwischen der Begrenzungslinie und dem ersten Treppenlinien-Abschnitt von 45° der Abstand einen Minimalwert besitzt, während bei Annäherung des Winkels an Werte von 0° und 90° der Abstand symmetrisch stetig gegen Unendlich konvergiert.

In einer möglichen Ausführungsform kann vorgesehen sein, dass für den Fall, dass der Verlauf der Begrenzungslinie durch eine Funktion f(x) charakterisiert ist, sich der Abstand gemäß nachfolgender Beziehung ergibt:

$$d = 2\,h\,(f'(x) + 1/f'(x))$$

mit:

d :=      Abstand zwischen einem Treppenstufen-Punkt und dem übernächsten Treppenstufen-Punkt
f(x) :=    Funktion, die den Verlauf der Begrenzungslinie charakterisiert
x :=      Position entlang der ersten Koordinatenachse
f'(x) :=   df(x) / dx (Ableitung von f(x))
h :=      senkrechter Abstand zwischen Begrenzungslinie und Treppenstufen-Punkten

Es ist auch möglich, dass der Abstand gemäß nachfolgender Beziehung vom Winkel zwischen der Begrenzungslinie und dem ersten Treppenlinien-Abschnitt abhängt:

$$d = 2\,h\,(\tan\alpha + 1/\tan\alpha)$$

mit:

d :=      Abstand zwischen einem Treppenstufen-Punkt und dem übernächsten Treppenstufen-Punkt
$\alpha$ :=     Winkel zwischen der Begrenzungslinie und einem ersten Treppenlinien-Abschnitt zwischen den Treppenstufen-Punkten
h :=      senkrechter Abstand zwischen Begrenzungslinie und Treppenstufen-Punkten

Desweiteren kann vorgesehen sein, dass gegenüberliegende Begrenzungslinien eines Teilungsbereichs durch Treppenlinien-Abschnitte approximiert sind, die entlang einer Koordinatenachse des Referenz-Koordinatensystems die gleiche Position aufweisen.

Hierbei kann die Position des Treppenlinien-Abschnitts entlang der anderen Koordinatenachse derart gewählt sein, dass die beiden resultierenden Flächen zwischen dem Treppenlinien-Abschnitt und der Begrenzungslinie, die beidseitig zur Begrenzungslinie ausgebildet werden, flächengleich sind.

Es ist ferner möglich, dass

- in einem ersten Teilabschnitt eines Teilungsbereichs gegenüberliegende Begrenzungslinien des Teilungsbereichs durch Treppenlinien-Abschnitte approximiert sind, die entlang einer ersten Koordinatenachse des Referenz-Koordinatensystems die gleiche Position aufweisen und
- in einem zweiten Teilabschnitt des Teilungsbereichs gegenüberliegende Begrenzungslinien des Teilungsbereichs durch Treppenlinien-Abschnitte approximiert sind, die entlang einer zweiten Koordinatenachse des Referenz-Koordinatensystems die gleiche Position aufweisen und
- wobei die beiden Teilabschnitte in einem Grenzbereich aneinanderstoßen.

Dabei können mehrere benachbarte Teilungsbereiche eine ähnliche Form aufweisen und die Lage der Grenzbereiche zwischen den Teilabschnitten in den verschiedenen Teilungsbereichen unterschiedlich gewählt werden.

Ferner kann die Lage der Grenzbereiche zwischen den Teilabschnitten derart gewählt sein, dass diese in einem Bereich der Gitterstruktur zu liegen kommen, der außerhalb des optisch genutzten Bereichs der Gitterstruktur liegt.

Es ist möglich, dass die Teilungsbereiche eine Radialteilung auf einer Maßverkörperung und/oder ein optisch wirksames Gitter auf einer Abtastplatte bilden.

Eine optische Positionsmesseinrichtung kann eine Maßverkörperung und/oder eine Abtastplatte mit einer erfindungsgemäßen Gitterstruktur aufweisen.

Als besonders vorteilhaft erweist sich bei der erfindungsgemäßen Gitterstruktur für eine optische Positionsmesseinrichtung, dass nunmehr die Begrenzungslinien der Teilungsbereiche der Gitterstruktur einen Kantenrauigkeits-Verlauf aufweisen, der frei von abrupten Änderungen ist. Ebenso gibt es keine abrupten Änderungen in den Breiten bzw. Positionen der Teilungsbereiche der Gitterstruktur. Dadurch können insbesondere Wellenfrontstörungen bei der optischen Abtastung derartiger Gitterstrukturen minimiert werden. Es resultieren fehlerminimierte Abtastsignale in der Positionsmesseinrichtung, in der diese Gitterstrukturen eingesetzt werden. Beispielsweise können erfindungsgemäße Gitterstrukturen auf Seiten der Maßverkörperung und/oder auf Seiten der Abtastplatte zum Einsatz kommen.

Weitere Einzelheiten und Vorteile der vorliegenden Erfindung seien anhand der nachfolgenden Beschreibung von Ausführungsbeispielen der erfindungsgemäßen Gitterstruktur für eine optische Positionsmesseinrichtung in Verbindung mit den Figuren erläutert.

## KURZE BESCHREIBUNG DER ZEICHNUNGEN

Es zeigt

Figur 1          eine stark schematisierte Darstellung einer optischen Positionsmesseinrichtung;

Figur 2          eine Draufsicht auf die Abtastplatte der Positionsmesseinrichtung aus Figur 1 mit erfindungsgemäß ausgebildeten Gitterstrukturen;

Figur 3          eine vergrößerte Teil-Darstellung der Gitterstrukturen auf der Abtastplatte;

Figur 4          einen Teil einer Begrenzungslinie eines Teilungsbereichs aus der Gitterstruktur der Figur 3;

Figur 5          einen Teilungsbereich eines weiteren Ausführungsbeispiels der erfindungsgemäßen Gitterstruktur mit gegenüberliegenden Begrenzungslinien;

Figur 6          einen vollständig approximierten Teilungsbereich eines weiteren Ausführungsbeispiels der erfindungsgemäßen Gitterstruktur;

Figur 7a, 7b    jeweils eine Darstellung von Gitterstrukturen mit mehreren gekrümmten Teilungsbereichen zum Erläutern einer weiteren Variante der erfindungsgemäßen Gitterstruktur;

Figur 8          eine Draufsicht auf die Maßverkörperung einer rotatorischen Positionsmesseinrichtung mit Gitterstrukturen, die eine Radialteilung ausbilden;

Figur 9          eine vergrößerte Teil-Darstellung der Gitterstrukturen auf der Maßverkörperung der Figur 8.

## BESCHREIBUNG DER AUSFÜHRUNGSFORMEN

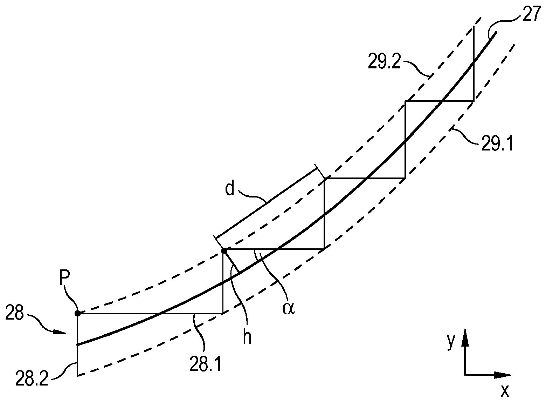

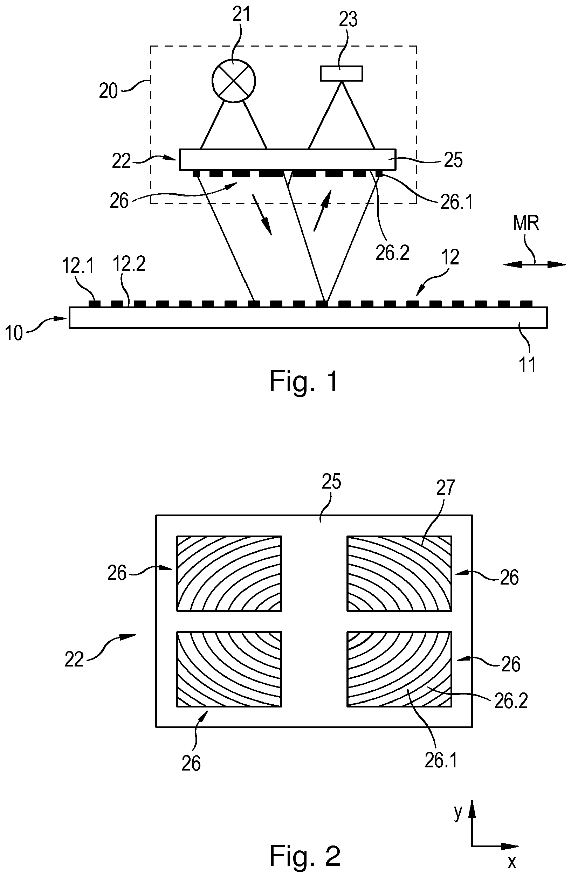

Figur 1 zeigt in stark schematisierter Form eine optische Positionsmesseinrichtung, in der erfindungsgemäß ausgebildete Gitterstrukturen an verschiedenen Stellen zum Einsatz kommen können. Das dargestellte Ausführungsbeispiel der Positionsmesseinrichtung dient zur Erfassung von Bewegungen entlang einer linearen Messrichtung MR. Zu diesem Zweck umfasst die Positionsmesseinrichtung eine Maßverkörperung 10 sowie eine relativ hierzu entlang der Messrichtung MR relativ bewegliche Abtasteinheit 20. Über eine optische Auflicht-Abtastung der Maßverkörperung 10 mit Hilfe der Abtasteinheit 20 werden in der Positionsmesseinrichtung positionsabhängige Signale erzeugt, die von einer nicht dargestellten Steuereinrichtung weiterverarbeitet werden. Die Maßverkörperung 10 und die Abtasteinheit 20 sind beispielsweise mit Maschinenkomponenten verbunden, die entlang der Messrichtung MR relativ beweglich zueinander sind. Auf Grundlage der von der Positionsmesseinrichtung gelieferten Signale positioniert die Steuereinrichtung die entsprechenden Maschinenteile.

Die Maßverkörperung 10 ist vorliegend als Reflexions-Maßverkörperung ausgebildet. Das heißt, die entsprechende Gitterstruktur 12 besteht aus alternierend entlang der Messrichtung MR angeordneten Teilungsbereichen 12.1, 12.2 mit hoher und geringer Reflektivität, die auf einem Trägerkörper 11 angeordnet sind. Die Teilungsbereiche 12.1, 12.2 der Gitterstruktur 12 auf Seiten der Maßverkörperung 10 sind dabei jeweils strichförmig bzw. rechteckförmig, wobei sich deren Längsachse senkrecht zur Zeichenebene und damit in der Maßverkörperungsebene senkrecht zur Messrichtung MR erstreckt. Im dargestellten Ausführungsbeispiel einer optischen Positionsmesseinrichtung ist die maßverkörperungsseitige Gitterstruktur 12 konventionell ausgebildet, d.h. die Begrenzungslinien der Teilungsbereiche sind parallel bzw. orthogonal zu einem Referenz-Koordinatensystem mit den orthogonalen Koordinatenachsen x, y orientiert. Eine erfindungsgemäße Gitterstruktur 26 ist in diesem Beispiel somit nur auf Seiten der Abtasteinheit 20 vorgesehen.

Die gegenüber der Maßverkörperung 10 relativ bewegliche Abtasteinheit 20 umfasst im wesentlichen eine Lichtquelle 21, eine Abtastplatte 22 sowie eine optoelektronische Detektoreinrichtung 23. Auf einem Trägerkörper 25 der Abtastplatte 22 ist vorliegend die erfindungsgemäß ausgebildete Gitterstruktur 26 in Form eines Transmissionsgitters angeordnet. Die Gitterstruktur 26 besteht aus alternierend entlang der Messrichtung MR angeordneten Teilungsbereichen 26.1, 26.2 mit hoher und geringer Durchlässigkeit. Über die Teilungsbereiche 26.1, 26.2 der Gitterstruktur 26 wird somit ein optisch wirksames Gitter auf der Abtastplatte 22 ausgebildet, das im Abtaststrahlengang eine bestimmte Funktionalität übernimmt. Zur detaillierten Erläuterung der erfindungsgemäßen Gitterstruktur 26 sei auf die nachfolgende Beschreibung verwiesen.

Die von der Lichtquelle 21 emittierten Strahlenbündel durchlaufen in der Abtasteinheit 20 zunächst die Abtastplatte 22 mit der darauf angeordneten Gitterstruktur 26, treffen dann auf die Maßverkörperung 10 und werden davon in Richtung der Abtasteinheit 20 zurückreflektiert. Hier durchlaufen die Strahlenbündel wiederum die Abtastplatte 22 mit der Gitterstruktur 26, bevor die Strahlenbündel dann in Form eines resultierenden Lichtmusters auf die optoelektronische Detektoreinrichtung 23 treffen. Die Detektoreinrichtung 23 setzt das Lichtmuster in verschiebungsabhängig modulierte, elektrische Signale um, die anschließend zur Weiterverarbeitung an die - nicht gezeigte - Steuereinrichtung übertragen werden.

Das konkret genutzte optische Abtastprinzip innerhalb der optischen Positionsmesseinrichtung ist für die vorliegende Erfindung nicht relevant, d.h. es können hier unterschiedlichste Abtastprinzipien zum Einsatz kommen. Beispielsweise geeignet sind rein abbildende Abtastverfahren, interferentielle Abtastverfahren, Reflexions-Abtastverfahren, Durchlicht-Abtastverfahren usw.. Ebenso nicht relevant für die vorliegende Erfindung ist, ob die entsprechende Positionsmesseinrichtung Inkrementalsignale oder Absolutpositionssignale liefert. Erfindungsgemäße Gitterstrukturen können somit in unterschiedlichsten optischen Positionsmesseinrichtungen zum Einsatz kommen.

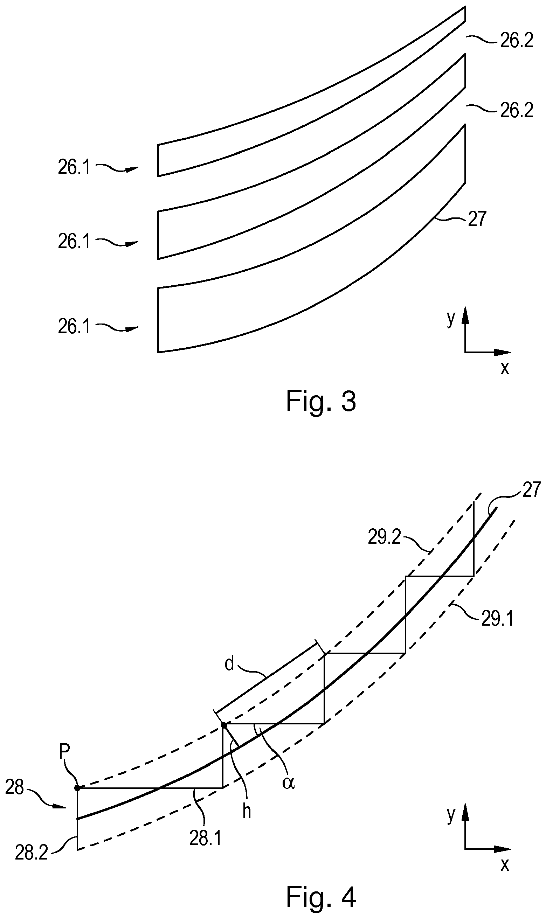

Wie vorstehend erwähnt, ist in der dargestellten Positionsmesseinrichtung in Figur 1 die erfindungsgemäß ausgebildete Gitterstruktur 26 in der Abtasteinheit 20 auf der Abtastplatte 22 angeordnet. Figur 2 zeigt eine Draufsicht auf die komplette Abtastplatte 22, in den Figuren 3 und 4 sind vergrößerte Teildarstellungen der Gitterstruktur 26 auf der Abtastplatte 22 veranschaulicht. Aus Figur 2 ist hierbei ersichtlich, wie in vier Teilbereichen der Abtastplatte 22 im vorliegenden Ausführungsbeispiel jeweils erfindungsgemäß ausgebildete Gitterstrukturen 26 auf einem transparenten Trägerkörper 25 angeordnet sind. Die entsprechenden Gitterstrukturen 26 umfassen dabei Teilungsbereiche 26.1, 26.2 mit jeweils mindestens einer Begrenzungslinie 27, die weder vollständig orthogonal noch vollständig parallel zu den Koordinatenachsen x, y eines orthogonalen Referenz-Koordinatensystems orientiert ist. Die Koordinatenachsen x, y des Referenz-Koordinatensystems sind im vorliegenden Beispiel vertikal und horizontal orientiert; dies ist für die vorliegende Erfindung jedoch nicht wesentlich, d.h. es kann auch eine andere Orientierung der orthogonalen Koordinatenachsen x, y des Referenz-Koordinatensystems im Raum vorliegen.

Ferner sei an dieser Stelle bereits darauf hingewiesen, dass auch die in der nachfolgenden Beschreibung verwendeten Begriffe und Bezugszeichen wie erste / zweite, unten / oben, links / rechts, horizontal / vertikal bzw. x, y keinesfalls einschränkend zu verstehen sind. Grundsätzlich ist ein Vertauschen der jeweiligen Begrifflichkeiten im Rahmen der vorliegenden Erfindung möglich.

Im dargestellten Ausführungsbeispiel ist die erfindungsgemäße Gitterstruktur aus Teilungsbereichen 26.1, 26.2 ausgebildet, die entweder durchlässig oder undurchlässig für die darauf einfallenden Strahlenbündel sind. Dabei sind alternierend licht-durchlässige Teilungsbereiche 26.2 und licht-undurchlässige Teilungsbereiche 26.1 aneinandergrenzend auf dem Trägerkörper 25 angeordnet. Beispielsweise kann hierzu vorgesehen sein, dass auf einem transparenten Trägerkörper 25 aus Glas licht-undurchlässige Teilungsbereiche 26.1 in Form einer Beschichtung mit Chrom angeordnet sind; die licht-durchlässigen Teilungsbereiche 26.2 werden durch unbeschichtete Flächen auf dem Trägerköper 25 gebildet.

Je nach Abtastprinzip der entsprechenden Positionsmesseinrichtung können die Teilungsbereiche der erfindungsgemäßen Gitterstruktur natürlich auch alternativ zu diesem Ausführungsbeispiel ausgebildet sein. So ist es etwa auch möglich, dass die Teilungsbereiche der Gitterstruktur eine höhere und geringere Durchlässigkeit besitzen, reflektierend und nicht-reflektierend oder höher reflektierend und geringer reflektierend ausgebildet sind. Desweiteren kann im Fall von Phasengittern vorgesehen sein, dass die Teilungsbereiche eine unterschiedliche phasenschiebende Wirkung auf die transmittierten oder reflektierten Strahlenbündel ausüben. Ferner können selbstverständlich auch sogenannte Blaze-Gitter erfindungsgemäß ausgebildet werden, also dreidimensionale Gitterstrukturen mit unterschiedlichen Höhen oder gezielt eingestellten Winkeln usw..

Eine nochmals vergrößerte Teil-Ansicht aus einem der vier Bereiche auf der Abtastplatte 22 mit mehreren Teilungsbereichen 26.1, 26.2 ist in Figur 3 zusammen mit dem vorgenannten Referenz-Koordinatensystem und den orthogonalen Koordinatenachsen x, y gezeigt. Wie aus dieser Darstellung ersichtlich, wird jeder der Teilungsbereiche 26.1, 26.2 hierbei entlang der angegebenen y-Richtung durch eine entsprechend mindestens teilweise gekrümmte Begrenzungslinie 27 begrenzt. Die Teilungsbereiche 26.1, 26.2 bilden hier somit ein optisch wirksames Gitter auf der Abtastplatte 22, beispielsweise in Form einer diffraktiven Optik wie z.B. einer Fresnellinse usw..

Anhand von Figur 4, die eine nochmalige starke Vergrößerung einer der Begrenzungslinien 27 aus Figur 3 zeigt, soll im Folgenden erläutert werden, wie eine derartige Begrenzungslinie 27 in der erfindungsgemäßen Gitterstruktur approximiert wird. Die Approximation der vorliegend gekrümmten Begrenzungslinie 27 erfolgt hierbei durch eine Treppenlinie 28, die aus aufeinanderfolgenden, orthogonal zueinander orientierten Treppenlinien-Abschnitten 28.1, 28.2 besteht. Die Treppenlinien-Abschnitte 28.1, 28.2 grenzen an Punkten P aneinander, die nachfolgend als Treppenstufen-Punkte P bezeichnet seien. Im dargestellten Ausführungsbeispiel sind die ersten Treppenlinien-Abschnitte 28.1 horizontal orientiert, die zweiten Treppenlinien-Abschnitte vertikal. Wie aus Figur 4 ersichtlich, sind damit die ersten und zweiten Treppenlinien-Abschnitte 28.1, 28.2 der Treppenlinie 28 parallel zu den beiden orthogonalen Koordinatenachsen x, y des Referenz-Koordinatensystems orientiert.

Die Treppenlinie 28 wird zur Approximation der Begrenzungslinie 27 zwischen zwei Approximations-Parallelen 29.1, 29.2 eingepasst, wobei die beiden Approximations-Parallelen 29.1, 29.2 jeweils in gleichem Abstand h beidseitig benachbart zur Begrenzungslinie 27 verlaufen. Die Treppenstufenpunkte P liegen dabei auf den Approximations-Parallelen 29.1, 29.2 und besitzen den Abstand h zur Begrenzungslinie 27. Im vorliegenden Ausführungsbeispiel verlaufen die beiden Approximations-Parallelen 29.1, 29.2 somit parallel zur Begrenzungslinie 27.

In einer derart erzeugten Treppenlinie 28 hängt in einer bevorzugten Ausführungsform dann der Abstand d zwischen einem Treppenstufen-Punkt P und dem übernächsten Treppenstufen-Punkt P stetig vom Winkel a ab, der zwischen der Begrenzungslinie 27 und dem ersten Treppenlinien-Abschnitt 28.1 zwischen den beiden Treppenstufen-Punkten P resultiert, der parallel zur ersten Koordinatenachse x des Referenz-Koordinatensystems orientiert ist. Hierbei sei vorausgesetzt, dass sich der Winkel a in Begrenzungslinien-Abschnitten der Größenordnung weniger μm nur in geringem Maße ändert und die Treppenlinie 28 dann im Mittel der Begrenzungslinie 27 folgt. In diesem Fall kann dann von einem linearen Verlauf der Begrenzungslinien 27 in diesem Bereich ausgegangen werden.

Konkret ist in einer solchen Approximationsvariante etwa vorgesehen, dass bei Werten des Winkels a zwischen der Begrenzungslinie 27 und dem ersten Treppenlinien-Abschnitt 28.1 von $\alpha = 45°$, $\alpha = 135°$, $\alpha = 225°$ oder $\alpha = 315°$ der Abstand d jeweils einen Minimalwert besitzt. Bei Annäherung des Winkels $\alpha$ an Werte von $\alpha = 0°$, $\alpha = 90°$, $\alpha = 180°$ oder $\alpha = 270°$ steigt der Abstand d jeweils stetig an. Insbesondere kann im Fall eines Winkels $\alpha = 45°$ zwischen der Begrenzungslinie 27 und dem ersten Treppenlinien-Abschnitt 28.1 der Abstand d einen Minimalwert besitzen, während bei Annäherung des Winkels $\alpha$ an Werte $\alpha = 0°$ und $\alpha = 90°$ der Abstand d symmetrisch stetig gegen Unendlich konvergiert.

Je nachdem, wie die Begrenzungslinie 27 mathematisch beschrieben werden kann, lässt sich die Abhängigkeit des Abstands d als maßgeblicher Parameter der approximierenden Treppenlinie 28 von anderen Geometrie-Parametern charakterisieren.

Ist es etwa möglich, die Begrenzungslinie 27 durch eine Funktion f(x) zu beschreiben, so ergibt sich der Abstand d gemäß der nachfolgenden Beziehung 1:

$$d = 2h\,(f'(x) + 1/f'(x)) \qquad\qquad (Gl.\ 1)$$

mit:

d := Abstand zwischen einem Treppenstufen-Punkt und dem übernächsten Treppenstufen-Punkt

f(x) := Funktion, die den Verlauf der Begrenzungslinie charakterisiert

x := Position entlang der ersten Koordinatenachse

f'(x) := df(x) / dx (Ableitung von f(x))

h := senkrechter Abstand zwischen Begrenzungslinie und Treppenstufen-Punkten

Im Fall, dass die Begrenzungslinie 27 nicht durch eine analytische Funktion f(x), sondern nur durch eine numerische Näherung, beispielsweise in Form eines Polygonzugs, beschreibbar ist, lässt sich die Abhängigkeit des Abstands d vom Winkel $\alpha$ zwischen der Begrenzungslinie 27 und dem ersten Treppenlinien-Abschnitt 28.1 auch gemäß der nachfolgenden Gleichung 2 beschreiben. In diesem Fall tritt an die Stelle der Ableitung in Gleichung 1 die Tangens-Funktion gemäß Gleichung 2:

$$d = 2\,h\,(\tan\alpha + 1/\tan\alpha) \qquad\qquad \text{(Gl. 2)}$$

mit:

d :=     Abstand zwischen einem Treppenstufen-Punkt und dem übernächsten Treppenstufen-Punkt

α :=     Winkel zwischen der Begrenzungslinie und einem ersten Treppenlinien-Abschnitt zwischen den Treppenstufen-Punkten

h :=     senkrechter Abstand zwischen Begrenzungslinie und Treppenstufen-Punkten

Im Fall der Charakterisierung der Begrenzungslinie durch einen Polygonzug, kann als Winkel α etwa ein entsprechender Winkel zwischen der Begrenzungslinie und einem einzigen Polygonzug-Abschnitt in diesem Bereich gewählt werden. Sind mehrere Polygonzug-Abschnitte in diesem Bereich vorgesehen, so kann als Winkel α hingegen ein mittlerer Winkel gewählt werden, der sich als Mittelwert aus verschiedenen einzelnen Winkeln zwischen der Begrenzungslinie und einzelnen Polygonzug-Abschnitten ergibt.

Über die vorstehend erläuterten Möglichkeiten zur Approximation der Begrenzungslinie 27 eines Teilungsbereichs der erfindungsgemäßen Gitterstruktur mittels einer geeigneten Treppenlinie 28 ist sichergestellt, dass die Begrenzungslinie 27 im Gegensatz zum Stand der Technik über den gesamten Verlauf eine gleichbleibende Kantenrauigkeit aufweist. Die Kantenrauigkeit ist hierbei als mittlerer Abstand $r_a$ der Treppenlinie 28 zur Begrenzungslinie 27 definiert.

Damit können die eingangs diskutierten Wellenfrontverzerrungen im Abtaststrahlengang optischer Positionsmesseinrichtungen und die daraus resultierenden Messfehler bei Verwendung entsprechend ausgebildeter Gitterstrukturen vermieden werden.

Im folgenden seien noch weitere Varianten und Ausführungsbeispiele der erfindungsgemäßen Gitterstrukturen erläutert.

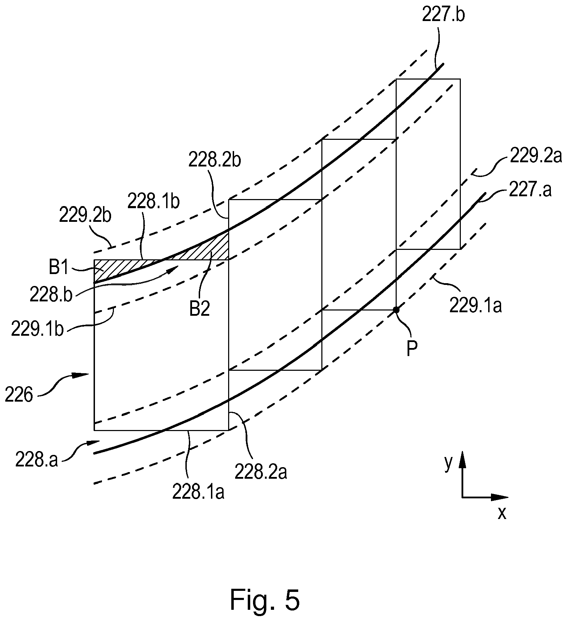

Anhand der Darstellungen in den Figuren 5, 6, 7a, 7b wird nachfolgend beschrieben, wie beispielsweise vorgegangen werden kann, um nicht nur eine einzelne Begrenzungslinie eines Teilungsbereiches erfindungsgemäß auszugestalten, sondern zwei einander gegenüberliegende Begrenzungslinien eines Teilungsbereiches der Gitterstruktur geeignet zu approximieren.

In Figur 5 ist hierzu ein Teil eines Teilungsbereichs 226 einer Gitterstruktur mit zwei gegenüberliegenden Begrenzungslinien 227.a, 227.b in einer vergrößerten Darstellung zusammen mit diversen Hilfsgrößen gezeigt, um ein mögliches Vorgehen zur geeigneten Approximation der beiden Begrenzungslinien 227.a, 227.b zu beschreiben.

Die Approximation der in der Figur 5 unteren, ersten Begrenzungslinie 227.a erfolgt dabei zunächst völlig analog zum oben erläuterten erfindungsgemäßen Vorgehen in Figur 4. Das heißt, zwischen die beiden Approximations-Parallelen 229.1a, 229.2a wird eine approximierende Treppenlinie 228.a eingepasst, deren Treppenstufen-Punkte P auf den beiden zugehörigen Approximations-Parallelen 229.1a, 129.2a liegen.

Zur Approximation der gegenüberliegenden zweiten Begrenzungslinie 227.b durch eine geeignete Treppenlinie 228.b wird folgendermaßen vorgegangen:

So erfolgt die Bestimmung der Position der ersten Treppenlinien-Abschnitte 228.1b, die vorliegend horizontal und parallel zur Koordinatenachse x des Referenz-Koordinatensystems orientiert sind, derart, dass diese Treppenlinien-Abschnitte 228.1b entlang der Koordinatenachse x die gleiche Position aufweisen wie die gegenüberliegenden Treppenlinien-Abschnitte 228.1a der Treppenlinie 228a, über die die untere Begrenzungslinie 227a approximiert wird.

Nachdem die Position des horizontalen Treppenlinienabschnitts 228.1b somit festgelegt ist, muss noch dessen Position entlang der zweiten Achse y des Referenz-Koordinatensystems bestimmt werden. Dies erfolgt so, dass dessen Position entlang der Koordinatenachse y derart gewählt wird, dass die beiden resultierenden Flächen B1, B2 zwischen dem Treppenlinien-Abschnitt 228.1b und der Begrenzungslinie 227.b, die beidseitig zur Begrenzungslinie 227.b ausgebildet werden, flächengleich sind. Selbstverständlich wäre es möglich, die Position entlang der zweiten Achse y auch nach einer anderen mathematischen Vorschrift festzulegen.

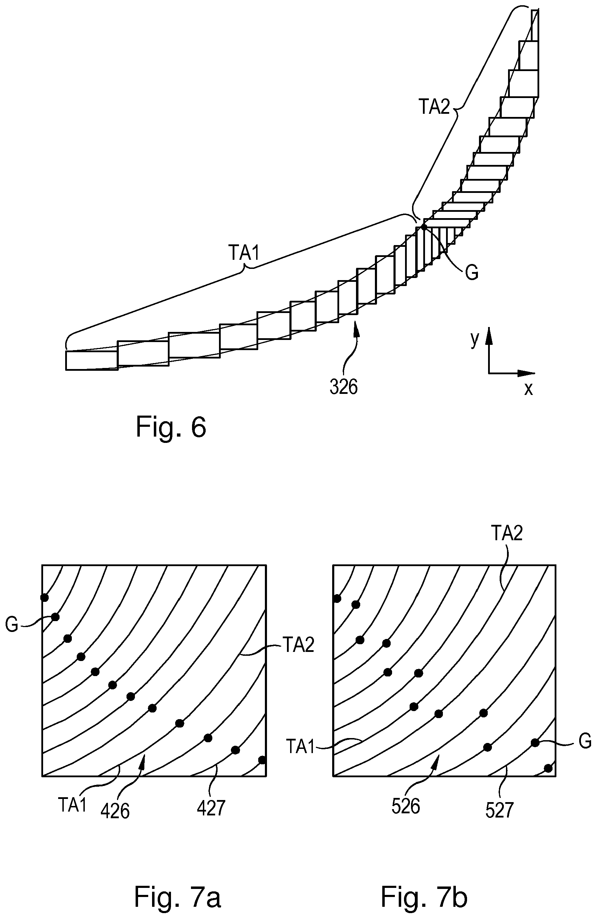

Entlang der Ausdehnung des Teilungsbereichs 226 werden auf diese Art und Weise die Begrenzungslinien 227.a, 227.b über geeignete Treppenlinien 228.a, 228.b abschnittsweise approximiert. Ein entsprechend vollständig auf diese Art und Weise approximierter Teilungsbereich 326 mit den zwei Treppenlinien zur Approximation einer unteren und einer oberen Begrenzungslinie ist in Figur 6 dargestellt. Aufgrund der erforderlichen Krümmung der beiden Begrenzungslinien des Teilungsbereiches 326 ist dabei eine weitere Besonderheit bei der Approximation zu beachten.

So ist in einem ersten, vorliegend linken, Teilabschnitt TA1 des Teilungsbereichs 326 vorgesehen, dass gegenüberliegende Begrenzungslinien des Teilungsbereichs durch Treppenlinien-Abschnitte approximiert sind, die entlang der ersten Koordinatenachse x des Referenz-Koordinatensystems jeweils die gleiche Position aufweisen. Im ersten Teilabschnitt TA1 des Teilungsbereichs 326 gilt für den oben erwähnten Winkel α zwischen einem horizontalen Treppenlinienabschnitt und der Begrenzungslinie jeweils α < 45°. Die Approximation gegenüberliegender Begrenzungslinien entspricht in diesem Teilabschnitt TA1 dem Vorgehen, wie es vorstehend anhand von Figur 5 im Detail erläutert wurde.

In einem zweiten Teilabschnitt TA2 des Teilungsbereichs 326 hingegen werden gegenüberliegende Begrenzungslinien des Teilungsbereichs 326 durch Treppenlinien-Abschnitte approximiert, die entlang der zweiten Koordinatenachse y des Referenz-Koordinatensystems die gleiche Position aufweisen. Im zweiten Teilabschnitt TA2 des Teilungsbereichs gilt für den Winkel $\alpha$ zwischen einem horizontalen Treppenlinienabschnitt und der Begrenzungslinie jeweils $\alpha > 45°$.

Wie aus Figur 6 ersichtlich, stoßen die beiden Teilabschnitte TA1, TA2 mit um 90° zueinander verdrehten und somit unterschiedlichen Approximations-Regimes in einem Grenzbereich G aneinander. Hier ist für den Winkel $\alpha$ zwischen einem horizontalen Treppenlinienabschnitt und der Begrenzungslinie im Grenzbereich G die Bedingung $\alpha = 45°$ erfüllt.

Durch die Wahl unterschiedlicher, um 90° zueinander verdrehter erfindungsgemäßer Approximations-Regimes lässt sich somit auch ein stark gekrümmter Teilungsbereich 326 gut approximieren, ohne dass Sprünge in der Kantenrauigkeit der Begrenzungslinien resultieren.

Selbstverständlich kann auch vorgesehen sein, dass nicht nur zwei Teilabschnitte TA1, TA2 vorliegen; es ist auch möglich, dass sich erste und zweite Teilabschnitte beliebig oft alternierend wiederholen, womit dann auch entsprechend viele Grenzbereiche G resultieren.

Umfasst eine Gitterstruktur mehrere benachbarte, stark gekrümmte Teilungsbereiche, deren Begrenzungslinien auf diese Art und Weise approximiert werden, so erweist sich eine weitere Maßnahme bei der Approximation der Begrenzungslinien als vorteilhaft, die anhand der Figuren 7a und 7b erläutert sei. Gezeigt ist dabei jeweils in stark schematisierter Form ein Teil einer Gitterstruktur mit stark gekrümmten Teilungsbereichen 426 bzw. 526 und entsprechenden Begrenzungslinien 427, 527. Die in den Figuren 7a, 7b vorgesehenen Punkte entlang der Begrenzungslinien 427, 527 veranschaulichen jeweils den Grenzbereich G, wo das Approximations-Regime wie vorstehend erläutert um 90° verdreht wird. Hierbei wird im Beispiel der Figur 7a die Lage des Grenzbereichs G aneinander angrenzender Teilabschnitte TA1, TA2 mit unterschiedlich approximierten Begrenzungslinien jeweils dort gewählt, wo a = 45° gilt. Im Ausführungsbeispiel der Figur 7b hingegen wird die Lage der Grenzbereiche G abweichend davon gewählt, nämlich unterschiedlich in den verschiedenen Teilungsbereichen 526. So ist gemäß der Variante in Figur 7b vorgesehen, dass die Lage des Grenzbereichs G zwischen den verschiedenen Teilabschnitte TA1, TA2 in den verschiedenen Teilungsbereichen aus einem vorgegebenen Lage-Intervall ausgewählt wird. Dieses Lage-Intervall kann beispielsweise durch einen Bereich des Winkels a zwischen 35° und 55° definiert sein usw.. Eine derartige Wahl der Position der Grenzbereiche G hat zur Folge, dass in der entsprechenden Gitterstruktur Sprünge durch einen Wechsel des Approximations-Regimes zusätzlich minimiert werden können.

In einer weiteren - nicht dargestellten - Variante wäre es ferner möglich, den Winkel $\alpha$ derart zu wählen, dass die Grenzbereiche, wo das Approximations-Regime wie vorstehend erläutert um 90° verdreht wird, in einem Bereich der Gitterstruktur zu liegen kommen, die außerhalb des optisch relevanten bzw. optisch genutzten Bereichs der jeweiligen Anwendung liegen. Dies hätte zur Folge, dass im optisch genutzten Bereich beispielsweise einer Abtastplatte einer optischen Positionsmesseinrichtung dann überhaupt kein Grenzbereich liegen würde, wo das Approximations-Regime geändert bzw. umgeschaltet werden müsste. Eine eventuell störende Beeinflussung der Abtastung durch derartige Grenzbereiche kann auf diese Art und Weise nochmals minimiert werden.

In einer derartigen Variante kann die Gitterstruktur desweiteren dann auch ausschließlich aus dem optisch genutzten Bereich bestehen.

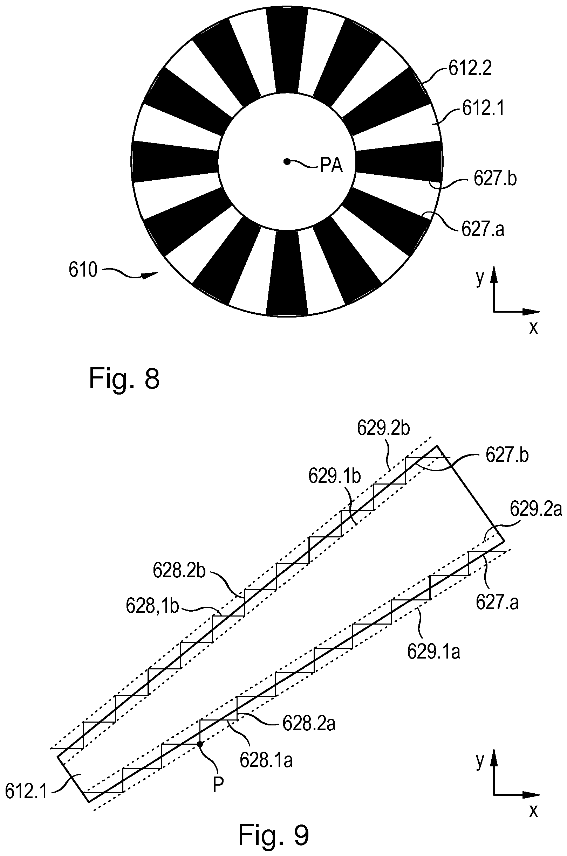

Anhand der Figuren 8 und 9 sei abschließend veranschaulicht, wie Gitterstrukturen ausgebildet werden können, die Begrenzungslinien aufweisen, die nicht gekrümmt verlaufen, sondern unter beliebigen, nicht-orthogonalen Winkeln zu den Koordinatenachsen x, y des Referenz-Koordinatensystems.

Figur 8 zeigt dabei die Draufsicht auf die Maßverkörperung 610 einer rotatorischen optischen Positionsmesseinrichtung, die eine Gitterstruktur in Form einer Radialteilung umfasst, die durch kreisringförmig um eine Rotationsachse RA angeordnete Teilungsbereiche 612.1, 612.2 ausgebildet wird. Die Teilungsbereiche 612.1, 612.2 weisen unterschiedliche optische Eigenschaften auf, im Fall einer Durchlicht-Abtastung etwa unterschiedliche optische Durchlässigkeiten. Wie aus Figur 8 ersichtlich, besitzen die Teilungsbereiche 612.1, 612.2 dieser Gitterstruktur Begrenzungslinien 627.a, 627.b, die jeweils geradlinig verlaufen und einen Winkel ungleich 0° oder 90° gegenüber den beiden Koordinatenachsen x, y des Referenz-Koordinatensystems einnehmen können.

In Figur 9 ist veranschaulicht, wie die einander gegenüberliegenden, linearen Begrenzungslinien 627.a, 627.b eines Teilungsbereichs 612.1 approximiert werden.

So ist jeweils vorgesehen, um die beiden zu approximierenden Begrenzungslinien 627.a, 627.b zwei Approximations-Parallelen 629.1a, 629.2a bzw. 629.1 b, 629.2b zu legen, zwischen denen dann jeweils eine Treppenlinie 628.a, 628.b eingepasst wird. Die Treppenlinien 628.a, 628.b umfassen orthogonal zueinander orientierte Treppenlinien-Abschnitte 628.1a, 628.2a bzw. 628.1b, 628.2b, die parallel zu den Koordinatenachsen x, y des Referenz-Koordinatensystems orientiert sind. Auf den Approximations-Parallelen 629.1a, 629.2a bzw. 629.1b, 629.2b liegen in dieser Gitterstruktur die Treppenstufen-Punkte P.

Neben den konkret beschriebenen Ausführungsbeispielen existieren im Rahmen der vorliegenden Erfindung selbstverständlich noch weitere Ausgestaltungsmöglichkeiten.

Wie bereits in der vorhergehenden Beschreibung angedeutet, können erfindungsgemäß ausgebildete Gitterstrukturen sowohl auf Seiten der Maßverkörperung als auch auf Seiten der Abtasteinheit angeordnet sein.

Desweiteren ist die vorliegende Erfindung nicht auf Gitterstrukturen in Form von Transmissions- oder Reflexions-Gitterstrukturen begrenzt. Selbstverständlich können auf Grundlage der vorstehend erläuterten Prinzipien auch Phasengitter und weitere Gitter-Arten dementsprechend ausgebildet werden etc..

**Patentansprüche**

1.  Gitterstruktur (26) für eine optische Positionsmesseinrichtung,

    - die Teilungsbereiche (26.1, 26.2) umfasst, die mindestens eine Begrenzungslinie (27; 127; 227.a, 227.b; 627.a, 627.b) aufweisen, welche mindestens teilweise gekrümmt verläuft und
    - wobei die Begrenzungslinie zumindest teilweise durch eine Treppenlinie (28; 128; 228.a, 228.b) approximiert ist, die aus aufeinanderfolgenden, orthogonal zueinander orientierten ersten und zweiten Treppenlinien-Abschnitten besteht, welche an Treppenstufen-Punkten (P) aneinandergrenzen und parallel zu den beiden Koordinatenachsen eines orthogonalen Referenz-Koordinatensystems orientiert sind,

    **dadurch gekennzeichnet, dass**
    die Treppenlinie (28; 128; 228.a, 228.b) zwischen zwei Approximations-Parallelen (29.1, 29.2; 129.1, 129.2, 129.1', 129.2'; 229.1a, 229.2a, 229.1b, 229.2b; 629.1a, 629.2a, 629.1b, 629.2b) eingepasst ist, die in jeweils gleichem Abstand (h) beidseitig benachbart zur Begrenzungslinie (27; 127; 227.a, 227.b; 627.a, 627.b) verlaufen, wobei die Treppenstufen-Punkte (P) auf den Approximations-Parallelen (29.1, 29.2; 129.1, 129.2, 129.1 ', 129.2'; 229.1a, 229.2a, 229.1b, 229.2b; 629.1a, 629.2a, 629.1b, 629.2b) liegen und

    - der Abstand (d) zwischen einem Treppenstufen-Punkt (P) und dem übernächsten Treppenstufen-Punkt (P) stetig vom Winkel (a) abhängt, der zwischen der Begrenzungslinie (27; 127; 227.a, 227.b) und einem ersten Treppenlinien-Abschnitt (28.1; 128.1; 228.1a, 228.1b; 628.1a, 628.1b) zwischen den beiden Treppenstufen-Punkten (P) resultiert, der parallel zu einer ersten Koordinatenachse (x) des Referenz-Koordinatensystems orientiert ist.

2.  Gitterstruktur nach Anspruch 1, wobei bei Werten des Winkels (a) zwischen der Begrenzungslinie (27; 127; 227.a, 227.b; 627.a, 627.b) und dem ersten Treppenlinien-Abschnitt (28.1; 128.1; 228.1a, 228.1b; 628.1a, 628.1b) von 45°, 135°, 225° oder 315° der Abstand (d) jeweils einen Minimalwert besitzt, während bei Annäherung des Winkels (a) an Werte von 0°, 90°, 180° oder 270° der Abstand (d) jeweils stetig ansteigt.

3.  Gitterstruktur nach Anspruch 1, wobei bei einem Wert des Winkels (a) zwischen der Begrenzungslinie (27; 127; 227.a, 227.b; 627.1, 627.b) und dem ersten Treppenlinien-Abschnitt (28.1; 128.1; 228.1a, 228.1b; 628.1a, 628.1b) von 45° der Abstand (d) einen Minimalwert besitzt, während bei Annäherung des Winkels (a) an Werte von 0° und 90° der Abstand (d) symmetrisch stetig gegen Unendlich konvergiert.

4.  Gitterstruktur nach Anspruch 1, wobei für den Fall, dass der Verlauf der Begrenzungslinie (27; 127; 227.a, 227.b; 627.a, 627.b) durch eine Funktion f(x) charakterisiert ist, sich der Abstand (d) gemäß nachfolgender Beziehung ergibt:

$$d = 2\,h\,(f'(x) + 1/f'(x))$$

    mit:

    d := Abstand zwischen einem Treppenstufen-Punkt und dem übernächsten Treppenstufen-Punkt
    f(x) := Funktion, die den Verlauf der Begrenzungslinie charakterisiert
    x := Position entlang der ersten Koordinatenachse
    f'(x) := df(x) / dx (Ableitung von f(x))
    h := senkrechter Abstand zwischen Begrenzungslinie und Treppenstufen-Punkten

5.  Gitterstruktur nach Anspruch 1, wobei der Abstand (d) gemäß nachfolgender Beziehung vom Winkel (a) zwischen der Begrenzungslinie (27; 127; 227.a, 227.b; 627.a, 627.b) und dem ersten Treppenlinien-Abschnitt (28.1; 128.1; 228.1a, 228.1b; 628.1a, 628.1b) abhängt:

$$d = 2\,h\,(\tan\alpha + 1/\tan\alpha)$$

mit:

d := Abstand zwischen einem Treppenstufen-Punkt und dem übernächsten Treppenstufen-Punkt

$\alpha$ := Winkel zwischen der Begrenzungslinie und einem ersten Treppenlinien-Abschnitt zwischen den Treppenstufen-Punkten

h := senkrechter Abstand zwischen Begrenzungslinie und Treppenstufen- Punkten

6. Gitterstruktur nach mindestens einem der vorhergehenden Ansprüche, wobei gegenüberliegende Begrenzungslinien (227.a, 227.b; 627.a, 627.b) eines Teilungsbereichs (226; 612.1) durch Treppenlinien-Abschnitte (228.1 a, 228.1 b; 628.1a, 628.1b) approximiert sind, die entlang einer Koordinatenachse (x) des Referenz-Koordinatensystems die gleiche Position aufweisen.

7. Gitterstruktur nach Anspruch 6, wobei die Position des Treppenlinien-Abschnitts (228.1 a, 228.1b; 628.1a, 628.1b) entlang der anderen Koordinatenachse (y) derart gewählt ist, dass die beiden resultierenden Flächen (B1, B2) zwischen dem Treppenlinien-Abschnitt (228.1a, 228.1b; 628.1a, 628.1b) und der Begrenzungslinie (227.a, 227.b; 628.a, 628.b), die beidseitig zur Begrenzungslinie (227.a, 227.b; 628.a, 628.b) ausgebildet werden, flächengleich sind.

8. Gitterstruktur nach mindestens einem der Ansprüche 1 - 5, wobei

- in einem ersten Teilabschnitt (TA1) eines Teilungsbereichs (326) gegenüberliegende Begrenzungslinien des Teilungsbereichs (326) durch Treppenlinien-Abschnitte approximiert sind, die entlang einer ersten Koordinatenachse (x) des Referenz-Koordinatensystems die gleiche Position aufweisen und
- in einem zweiten Teilabschnitt (TA2) des Teilungsbereichs (326) gegenüberliegende Begrenzungslinien des Teilungsbereichs durch Treppenlinien-Abschnitte approximiert sind, die entlang einer zweiten Koordinatenachse (y) des Referenz-Koordinatensystems die gleiche Position aufweisen und
- wobei die beiden Teilabschnitte (TA1, TA2) in einem Grenzbereich (G) aneinanderstoßen.

9. Gitterstruktur nach Anspruch 8, mit mehreren benachbarten Teilungsbereichen (526) ähnlicher Form, wobei die Lage der Grenzbereiche (G) zwischen den Teilabschnitten (TA1, TA2) in den verschiedenen Teilungsbereichen (526) unterschiedlich gewählt ist.

10. Gitterstruktur nach Anspruch 8, wobei die Lage der Grenzbereiche zwischen den Teilabschnitten derart gewählt ist, dass diese in einem Bereich der Gitterstruktur zu liegen kommen, der außerhalb des optisch genutzten Bereichs der Gitterstruktur liegt.

11. Gitterstruktur nach Anspruch 1, wobei die Teilungsbereiche ein optisch wirksames Gitter auf einer Abtastplatte (22) bilden.

12. Positionsmesseinrichtung mit einer Abtastplatte (22) mit einer Gitterstruktur nach mindestens einem der Ansprüche 1 - 10.

**Claims**

1. Grating structure (26) for an optical position measuring apparatus,

- which comprises graduation regions (26.1, 26.2), which have at least one boundary line (27; 127; 227.a, 227.b; 627.a, 627.b), which is at least partially curved and
- wherein the boundary line is approximated at least partially by a stepped line (28; 128; 228.a, 228.b), which consists of consecutive first and second stepped line sections, oriented orthogonally to one another, which touch one another at step points (P) and are oriented parallel to the two coordinate axes of an orthogonal reference coordinate system,

**characterized in that**

- the stepped line (28; 128; 228.a, 228.b) is fitted between two approximation parallels (29.1, 29.2; 129.1, 129.2, 129.1', 129.2'; 229.1a, 229.2a, 229.1b, 229.2b; 629.1a, 629.2a, 629.1b, 629.2b), which each run at an equal distance (h) from and adjacent to the boundary line (27; 127; 227.a, 227.b; 627.a, 627.b) on both sides, wherein the step points (P) lie on the approximation parallels (29.1, 29.2; 129.1, 129.2, 129.1', 129.2'; 229.1a, 229.2a, 229.1b, 229.2b; 629.1a, 629.2a, 629.1b, 629.2b) and
- the distance (d) between a step point (P) and the next-but-one step point (P) depends continuously on the angle ($\alpha$) which results between the boundary line (27; 127; 227.a, 227.b) and a first stepped line section (28.1; 128.1; 228.1a, 228.1b; 628.1a, 628.1b) between the two step points (P), which section is oriented parallel to a first coordinate axis (x) of the reference coordinate system.

2. Grating structure according to Claim 1, wherein the distance (d) respectively has a minimum value for values of 45°, 135°, 225° or 315° of the angle ($\alpha$) between the boundary line (27; 127; 227.a, 227.b; 627.a, 627.b) and the. first stepped line section (28.1; 128.1; 228.1a, 228.1b; 628.1a, 628.1b), while the distance (d) respectively continuously increases when the angle ($\alpha$) approaches values of 0°, 90°, 180° or 270°.

3. Grating structure according to Claim 1, wherein the distance (d) has a minimum value for a value of 45° of the angle ($\alpha$) between the boundary line (27; 127; 227.a, 227.b; 627.1, 627.b) and the first stepped line section (28.1; 128.1; 228.1a, 228.1b; 628.1a, 628.1b), while the distance (d) converges symmetrically and continuously to infinity when the angle ($\alpha$) approaches values of 0° and 90°.

4. Grating structure according to Claim 1, wherein, for the case that the curve of the boundary line (27; 127; 227.a, 227.b; 627.a, 627.b) is **characterized by** a function f(x), the distance (d) is given according to the following relationship:

$$d = 2\,h\,(f'(x) + 1/f'(x))$$

with:

d := distance between a step point and the next-but-one step point
f (x) := function which characterizes the curve of the boundary line
x := position along the first coordinate axis
f'(x) := df(x) / dx (derivative of f(x))
h := perpendicular distance between boundary line and step points.

5. Grating structure according to Claim 1, wherein, according to the following relationship, the distance (d) depends on the angle ($\alpha$) between the boundary line (27; 127; 227.a, 227.b; 627.a, 627.b) and the first stepped line section (28.1; 128.1; 228.1a, 228.1b; 628.1a, 628.1b):

$$d = 2\,h\,(\tan \alpha + 1/\tan \alpha)$$

with:

d := distance between a step point and the next-but-one step point
$\alpha$ := angle between the boundary line and a first stepped line section between the step points
h := perpendicular distance between boundary line and step points.

6. Grating structure according to at least one of the preceding claims, wherein opposite boundary lines (227.a, 227.b; 627.a, 627.b) of a graduation region (226; 612.1) are approximated by stepped line sections (228.1a, 228.1b; 628.1a, 628.1b), which sections have the same position along a coordinate axis (x) of the reference coordinate system.

7. Grating structure according to Claim 6, wherein the position of the stepped line section (228.1a, 228.1b; 628.1a, 628.1b) along the other coordinate axis (y) is chosen in such a way that the two resulting areas (B1, B2) between the stepped line section (228.1a, 228.1b; 628.1a, 628.1b) and the boundary line (227.a, 227.b; 628.a, 628.b), which areas are formed on both sides of the boundary line (227.a, 227.b; 628.a, 628.b), have the same size.

8. Grating structure according to at least one of Claims 1 - 5, wherein

- in a first subsection (TA1) of a graduation region (326), opposite boundary lines of the graduation region (326) are approximated by stepped line sections, which sections have the same position along a first coordinate axis (x) of the reference coordinate system and
- in a second subsection (TA2) of the graduation region (326), opposite boundary lines of the graduation region are approximated by stepped line sections, which sections have the same position along a second coordinate axis (y) of the reference coordinate system and
- wherein the two subsections (TA1, TA2) abut one another in a border region (G).

9. Grating structure according to Claim 8, having a plurality of adjacent graduation regions (526) of a similar shape, wherein the location of the border regions (G) between the subsections (TA1, TA2) in the various graduation regions (526) is chosen to be different.

10. Grating structure according to Claim 8, wherein the location of the border regions between the subsections is chosen in such a way that these come to lie in a region of the grating structure which lies outside of the optically used region of the grating structure.

11. Grating structure according to Claim 1, wherein the graduation regions form an optically effective grating on a scanning plate (22).

12. Position measuring apparatus having a scanning plate (22) having a grating structure according to at least one of Claims 1 - 10.

**Revendications**

1. Structure en réseau (26) pour un dispositif de mesure de position optique,

- qui comprend des zones de séparation (26.1, 26.2) qui possèdent au moins une ligne de délimitation (27 ; 127 ; 227.a, 227.b ; 627.a, 627.b), laquelle suit un tracé au moins partiellement courbe et
- la ligne de délimitation s'approchant par approximation au moins partiellement d'une ligne en escalier (28 ; 128 ; 228.a, 228.b) qui se compose de premières et de deuxièmes portions de ligne en escalier successives orientées de manière orthogonale les unes par rapport aux autres, lesquelles se croisent mutuellement au niveau de points de marche d'escalier (P) et sont orientées parallèlement aux deux axes de coordonnées d'un système de coordonnées de référence orthogonal,

**caractérisée en ce que**
la ligne en escalier (28 ; 128 ; 228.a, 228.b) est adaptée entre deux parallèles d'approximation (29.1, 29.2 ; 129.1, 129.2, 129.1', 129.2' ; 229.1a, 229.2a, 229.1b, 229.2b ; 629.1a, 629.2a, 629.1b, 629.2b) qui suivent un tracé voisin de la ligne de délimitation (27 ; 127 ; 227.a, 227.b ; 627.a, 627.b) respectivement à un même écart (h) des deux côtés, les points de marche d'escalier (P) se trouvant sur les parallèles d'approximation (29.1, 29.2 ; 129.1, 129.2, 129.1', 129.2' ; 229.1a, 229.2a, 229.1b, 229.2b ; 629.1a, 629.2a, 629.1b, 629.2b) et
l'écart (d) entre un point de marche d'escalier (P) et le deuxième point de marche d'escalier (P) suivant dépendant constamment de l'angle (α) qui résulte entre la ligne de délimitation (27 ; 127 ; 227.a, 227.b) et une première portion de ligne en escalier (28.1 ; 128.1 ; 228.1a, 228.1b ; 628.1a, 628.1b) entre les deux points de marche d'escalier (P) qui est orientée parallèlement à un premier axe de coordonnées (x) du système de coordonnées, de référence.

2. Structure en réseau selon la revendication 1, avec laquelle, dans le cas de valeurs de l'angle (α) entre la ligne de délimitation (27 ; 127 ; 227.a, 227.b ; 627.a, 627.b) et la première portion de ligne en escalier (28.1 ; 128.1 ; 228.1a, 228.1b ; 628.1a, 628.1b) de 45°, 135°, 225° ou 315°, l'écart (d) possède respectivement une valeur minimale, alors que dans le cas où l'angle (α) se rapproche des valeurs de 0°, 90°, 180° ou 270°, l'écart (d) augmente respectivement continuellement.

3. Structure en réseau selon la revendication 1, avec laquelle, dans le cas de valeurs de l'angle (α) entre la ligne de

délimitation (27 ; 127 ; 227.a, 227.b ; 627.a, 627.b) et la première portion de ligne en escalier (28.1 ; 128.1 ; 228.1a, 228.1b ; 628.1a, 628.1b) de 45°, l'écart (d) possède une valeur minimale, alors que dans le cas où l'angle ($\alpha$) se rapproche des valeurs de 0° et 90°, l'écart (d) converge continuellement de manière symétrique vers l'infini.

4.  Structure en réseau selon la revendication 1, avec laquelle, dans le cas où le tracé de la ligne de délimitation (27 ; 127 ; 227.a, 227.b ; 627.a, 627.b) est **caractérisé par** une fonction f(x), l'écart (d) est obtenu conformément à la relation suivante :

$$d = 2h(f'(x) + 1/f'(x))$$

où :

> d = écart entre un point de marche d'escalier et le deuxième point de marche d'escalier suivant
> f(x) = fonction qui caractérise le tracé de la ligne de délimitation
> x = position le long du premier axe de coordonnées f'(x) = df(x)/dx (dérivée de f(x))
> h = écart perpendiculaire entre la ligne de délimitation et les points de marche d'escalier.

5.  Structure en réseau selon la revendication 1, l'écart (d) dépendant de l'angle ($\alpha$) entre la ligne de délimitation (27 ; 127 ; 227.a, 227.b ; 627.a, 627.b) et la première portion de ligne en escalier (28.1 ; 128.1 ; 228.1a, 228.1b ; 628.1a, 628.1b) conformément à la relation suivante :

$$d = 2h(\tan \alpha + 1/\tan \alpha)$$

où :

> d = écart entre un point de marche d'escalier et le deuxième point de marche d'escalier suivant
> $\alpha$ = angle entre la ligne de délimitation et une première portion de ligne en escalier entre les points de marche d'escalier
> h = écart perpendiculaire entre la ligne de délimitation et les points de marche d'escalier.

6.  Structure en réseau selon au moins l'une des revendications précédentes, les lignes de délimitation (227.a, 227.b ; 627.a, 627.b) en vis-à-vis d'une zone de séparation (226 ; 612.1) s'approchant par approximation de portions de ligne en escalier (228.1a, 228.1b ; 628.1a, 628.1b) qui présentent la même position le long d'un axe de coordonnées (x) du système de coordonnées de référence.

7.  Structure en réseau selon la revendication 6, la position de la portion de ligne en escalier (228.1a, 228.1b ; 628.1a, 628.1b) le long de l'autre axe de coordonnées (y) étant choisie de telle sorte que les deux surfaces (B1, B2) résultantes entre la portion de ligne en escalier (228.1a, 228.1b ; 628.1a, 628.1b) et la ligne de délimitation (227.a, 227.b ; 628.a, 628.b) qui sont formées des deux côtés de la ligne de délimitation (227.a, 227.b ; 628.a, 628.b) sont de superficie identique.

8.  Structure en réseau selon au moins l'une des revendications 1 à 5,

> - dans une première portion partielle (TA1) d'une zone partielle (326), des lignes de délimitation en vis-à-vis de la zone partielle (326) s'approchent par approximation de portions de lignes en escalier qui présentent la même position le long d'un premier axe de coordonnées (x) du système de coordonnées de référence et
> - dans une deuxième portion partielle (TA2) de la zone partielle (326), des lignes de délimitation en vis-à-vis de la zone partielle s'approchent par approximation de portions de lignes en escalier qui présentent la même position le long d'un deuxième axe de coordonnées (y) du système de coordonnées de référence et
> - les deux portions partielles (TA1, TA2) étant en contiguïté dans une zone de frontière (G).

9.  Structure en réseau selon la revendication 8, comprenant plusieurs zones de séparation (526) voisines de forme similaire, la position des zones de frontière (G) entre les portions partielles (TA1, TA2) dans les différentes zones de séparation (526) étant choisie différente.

10. Structure en réseau selon la revendication 8, la position des zones de frontière entre les portions partielles étant choisie de telle sorte que celles-ci se retrouvant dans une zone de la structure en réseau qui se trouve en-dehors de la zone de la structure en réseau qui est utilisée optiquement.

11. Structure en réseau selon la revendication 1, les zones de séparation formant un réseau optiquement actif sur une plaque de balayage (22).

12. Dispositif de mesure de position comprenant une plaque de balayage (22) ayant une structure en réseau selon au moins l'une des revendications 1 à 10.

Fig. 1

Fig. 2

Fig. 3

Fig. 4

Fig. 5

Fig. 6

Fig. 7a          Fig. 7b

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004025335 A1

- US 7349599 B1

**In der Beschreibung aufgeführte Nicht-Patentliteratur**

- Fabrication of highefficiency multilayer-coated binary blazed gratings in the EUV regime. **P.P. NAULLEAU et al.** OPTICS COMMUNICATIONS. Elsevier, 06. Dezember 2001, vol. 200, 27-34